# EUROPEAN PATENT SPECIFICATION

(11) **EP 2 478 665 B1**
(45) Date of publication and mention of the grant of the patent: **19.11.2014**
(21) Application number: 10770877.8
(22) Date of filing: 16.09.2010
(51) Int. Cl.: H04L 12/14

(54) **METHOD AND COMMUNICATION DEVICE FOR USING A FIRST SERVICE BASED ON AN ACCOUNT CHARGEABLE WITH THE USE OF A SECOND SERVICE**
VERFAHREN UND VORRICHTUNG ZUR NUTZUNG EINES ERSTEN DIENSTES BASIEREND AUF EINEM KONTO DAS DURCH NUTZUNG EINES ZWEITEN DIENSTES AUFGELADEN WERDEN KANN
PROCÉDÉ ET APPAREIL POUR L'UTILIZATION D'UN PREMIER SERVICE SUR LA BASE D'UN COMPTE CHARGEABLE EN UTILISANT UN SECOND SERVICE

(30) Priority: 16.09.2009 US 561075
(43) Date of publication of application: 25.07.2012
(73) Proprietor: Telefonaktiebolaget L M Ericsson (publ), 164 83 Stockholm (SE)
(72) Inventor: ZHU, Zhongwen, Saint-Laurent Québec H4R 3H7 (CA); GAVITA, Edoardo, Laval Québec H7M 4N4 (CA)
(74) Representative: Röthinger, Rainer
(86) International application number: PCT/IB2010/054195
(87) International publication number: WO 2011/033471

(56) References cited:
- WO-A1-2008/136022
- WO-A2-00/05684
- WO-A2-2006/125084

## Description

### TECHNICAL FIELD

The present invention generally relates to communication networks, more specifically, the present invention is concerned with a method and a communication device for using a first service based on an account chargeable with the use of a second service in a communication network.

### BACKGROUND

Nowadays, in order to retain and attract more and more subscribers, network operators need to come up with ingenious and attractive services to offer to their subscribers and potential subscribers. Most of the time, when a user subscribes to the network operator's services, he/she subscribes to a bundle of services for a monthly fee, for example.

However, the different bundle of services often lack flexibility for the subscribers and normally the fees charged to use one service can become quite expensive. For example, a network operator can charge up to 0.25$ for sending or receiving one text message.

Therefore, there is a need for improved solutions in encouraging subscribers to use the services offered by a network operator.

WO 00/05684 may be construed to disclose a method of pre-paid Internet access comprising accessing the Internet using a prepaid account and performing one or more activities while connected to said Internet, which activities modify the balance in addition to the act of access which causes a deduction from the balance of said account. When a user computer is to be connected to the Internet, the connection is mediated by a pre-paid server, which manages the act of connecting user to Internet and also acts to bill the user for the Internet access. Once a user is connected to Internet, the connection may pass through pre-paid server. Alternatively or additionally, the set-up connection may be direct between user and Internet.

### SUMMARY

There are provided a method and a network node according to the independent claims.

Developments are as set forth in the respective dependent claims.

Preferably there is provided a method for provisioning services to a subscriber. The method comprises preferably receiving an indication of use of a first service by the subscriber; and upon receipt of the indication, checking if an account of the subscriber comprises a sufficient number of credits for allowing the subscriber to use the first service; if the number of credits is not sufficient, pushing a second service to the subscriber according to a predetermined contract between the subscriber and a network operator so as to increment the number of credits in the account for allowing the first service to proceed.

Preferably, there is provided a network node for provisioning services to a subscriber. The network node preferably comprises a processor for receiving an indication of use of a first service by the subscriber; and a service function for checking if an account of the subscriber comprises a sufficient number of credits for allowing the subscriber to use the first service; if the number of credits is not sufficient, the service function pushes a second service to the subscriber according to a predetermined contract between the subscriber and a network operator so as to increment the number of credits in the account for allowing the first service to proceed.

Preferably, there is provided a method for using a first service based on an account of a subscriber, the account being chargeable with a second service. The method preferably comprises requesting the use of the first service by the subscriber; and upon request of the use of the first service, receiving the second service if the number of credits is not sufficient in the account of the subscriber to allow the subscriber to use the first service, wherein receiving the second service increases the number of credits in the account.

Preferably, there is provided a communication device for using a first service based on an account of a subscriber, the account being chargeable with a second service. The communication device preferably comprises an output for requesting the use of the first service; and an input for receiving the second service, in response to the request of the use of the first service, if the number of credits is not sufficient in the account of the subscriber to allow the subscriber to proceed with the use of the first service, wherein receiving the second service increases the number of credits in the account.

The foregoing and other objects, advantages and features of the present invention will become more apparent upon reading of the following non-restrictive description of illustrative embodiments thereof, given by way of example only with reference to the accompanying drawings.

### BRIEF DESCRIPTION OF THE DRAWINGS

In the appended drawings:
Figure 1 is a schematic view of a communication network in which embodiments of the present invention can be deployed;
Figure 2 is a flow chart illustrating a method, according to an embodiment of the present invention, for provisioning services to a subscriber;
Figure 3 is a schematic view of a network node, according to an embodiment of the present invention, for provisioning services to a subscriber;
Figure 4 is a flow chart illustrating a method for using a first service based on an account of a subscriber, the account being chargeable with a second service, according to an embodiment of the present invention;
Figure 5 is a schematic view of a communication device for using a first service based on an account of a subscriber, the account being chargeable with a second service, according to an embodiment of the present invention;
Figure 6 is a flow chart illustrating a traffic flow for receiving Instant Messaging (IM) in exchange of receiving advertisements in the communication network of Figure 1, according to an embodiment of the present invention; and
Figure 7 is a flow chart illustrating another traffic flow for sending Instant Messaging (IM) in exchange of receiving advertisements in the communication network of Figure 1, according to an embodiment of the present invention.

### DETAILED DESCRIPTION

Generally stated, non-restrictive illustrative embodiments of the present invention allow a network operator to provision services to its subscribers. Indeed, the subscribers of the network operator can use a first service with their account which can be charged through the use of a second service. To do so, the subscribers agree to have a predetermined contract with the network operator for using the first service in relation to the second service. For example, whenever the number of credits in the account of the subscribers is not sufficient for the use of the first service, the number of credits can be incremented through the use of the second service. For example, the first service can be sending or receiving text messages (SMS) and the second service can be receiving advertisements. Therefore, by agreeing to the predetermined contract, for example, sending one SMS in exchange of receiving one advertisement, the subscribers can send SMS to each other even if their accounts do not have enough credits, by accepting to receive the advertisements.

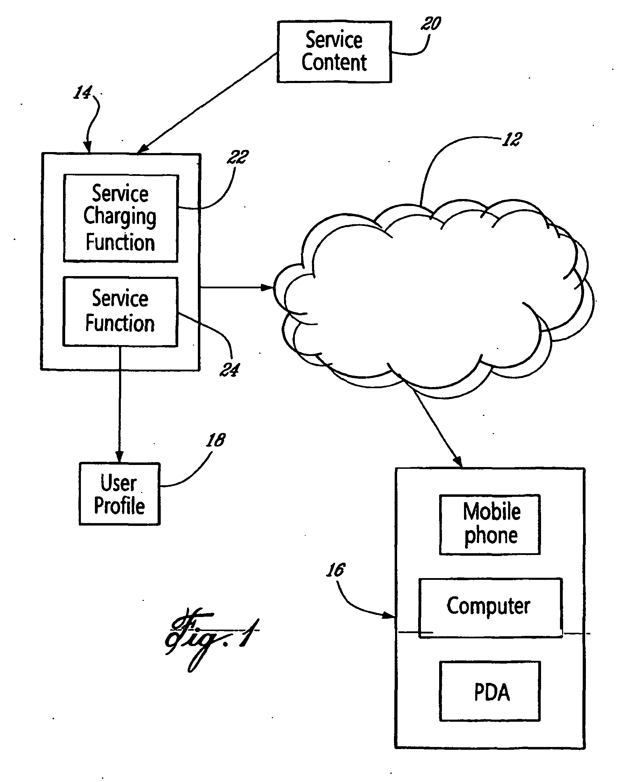

Now turning to Figure 1, a non-restrictive illustrative of a communication network 10 in which embodiments of the present invention can be deployed will be described.

The exemplary communication network 10 comprises a system 12 for providing the first and/or second services. For example, in the case where the first service comprises using Instant Messaging (IM), the system 12 can be an IMS-based system for providing the IM services. The first service can also comprise sending/receiving SMS, MMS, chat, file transfer, gaming, multimedia services, location-based services, etc. Thus depending on the first and/or second services offered by the system 12, the system 12 comprises corresponding technologies for supporting the services. The different services provided and supported by the system 12, such as IM services, advertisements, gaming, etc., are believed to be well-known in the art and thus will not be further described. The system 12 is connected to a service handling server (SHS) 14. The system 12 is also connected to a plurality of end-user devices 16.

The SHS 14 allows for using the first service with an account which can be charged with the use of the second service. The SHS 14 can intercept/receive an indication of use of the first service by a subscriber, for example. Then, it checks if there are enough credits in the subscriber's account to proceed with the first service. If there are not enough credits, the SHS 14 can push a second service to the subscriber so as to increment the number of credits in his/her account. More specifically, the SHS 14 comprises a service charging function 22 and a service function 24. The service function 24 checks if the subscriber wishing to use the first service has a sufficient number of credits in his/her account to do so. If the number of credits is not sufficient, the service function 24 can then push the use of the second service to the subscriber, in order to increment the number of credits in the account and then allow the first service to proceed.

The service charging function 22 allows a network operator to determine or build the contract with its subscribers, who can have multiple end-user devices. A contract can comprise a plurality of categories of service levels, which are offered to the subscribers. In addition, each of the plurality of categories can be associated to one of the multiple or plurality of end-user device of the subscriber. For example, the contract can stipulate that one use of the second service can increment the account by a number of X credits, X being configurable. Also, for the same service, each end-user device of the subscriber can earn a different number of credits, and also at different time, for example.

It should be noted that the service charging function 22 and the service function 24 can be co-located in a same node or located in separates nodes.

Since the subscriber usually has a plurality of end-user devices, such as the devices 16, different categories of services can be mapped to each of the devices 16. For example, in the case of IM, a first device can sent text messages only in exchange of receiving advertisements. A second device can send MMS or even video in exchange of receiving advertisements. The same can be true with the type of advertisements sent to the subscriber. For example, when using the first device, the subscriber only receives text advertisements. However, when using the second device, the subscriber can receive 2D or 3D advertisements. 2D advertisements can be defined as multimedia contents having texts and images. 3D advertisements can be defined as multimedia contents having 3 components, such as text, image and video.

The plurality of end-user devices 16, which belongs to one subscriber, is usually registered under one subscription. In that case, the service charging function 22 is in charge of mapping the different categories of services to the different devices of the subscriber.

For example, the plurality of end-user devices 16 can comprise a computer, a mobile phone, a smart phone, a Personal Digital Assistant (PDA), etc.

The SHS 14 is also connected to a user profile database 18 and a services content 20.

When the SHS 14 receives an indication of use of the first service by a subscriber, it then connects to the user profile database 18 in order to fetch the user profile of the subscriber so as to retrieve the predetermined contract information between the subscriber and the network operator and the different categories of services.

In the case where the subscriber's account has not enough credits to use the first service, the SHS 14 connects to the services content 20 to get the content of the second service. For example, in the case the second service is concerned about the advertisements, the services content 20 contains the advertisement contents from which the SHS 14 can select an advertisement to be pushed to the subscriber so as to increment the number of credits in his/her account.

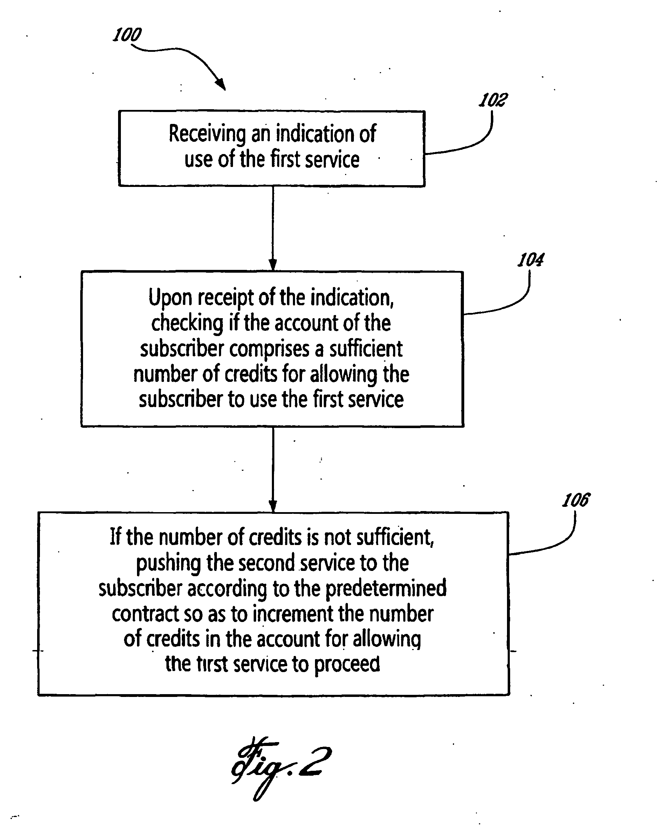

Now turning to Figure 2, a method 100 for provisioning services to a subscriber will be described. The subscriber has an account of credits for using a first service and has a predetermined contract with the network operator for using the first service in relation to a second service, for example.

Method 100 starts with step 102 in which the SHS 14 receives an indication of use of a first service by the subscriber. For example, the SHS 14 can intercept the message (SMS, MMS, etc.) that the subscriber wishes to send to his/her friends.

Upon receipt of the indication, in step 104, the service function 24 of the SHS 14 checks if the account of the subscriber (sender) comprises a sufficient number of credits for allowing the subscriber to use the first service.

If the number of credits is not sufficient in the account, in step 106, the SHS 14, through the service function 24, pushes a second service to the subscriber according to the predetermined contract so as to increment the number of credits in the account for allowing the first service to proceed. The service function 24 obtains the second service from the services content 20, for example.

It should be noted that the rate of incrementation of the credits in the subscriber's account is determined in the contract.

If the number of credits is sufficient, the service function 24 allows the first service to proceed then.

However, it should be noted that even if there are enough credits in the account, the SHS 14 can still decide to push the second service to the subscriber. In this case, if the subscriber accepts the second service, the SHS 14 will give a credit/rebate to the subscriber, for example, e.g. no credits are deducted for the use of the first service.

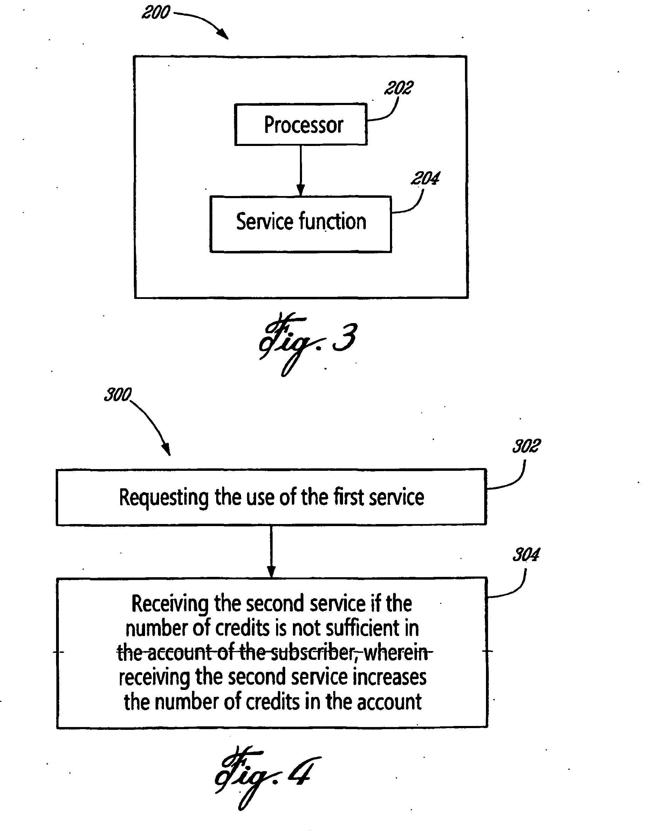

Now, turning to Figure 3, a network node 200 for provisioning services to a subscriber will be described. The subscriber has an account of credits for using a first service and has a predetermined contract with the network operator for using the first service in relation to a second service, for example.

The network node 200 can be for example the SHS 14 or any other node which comprises a processor 202 and a service function such as the service function 24 of Figure 1. Of course the network node 200 also comprises a plurality of other components (not shown), such as a memory, additional processors, input/output modules, etc., for performing its usual tasks and procedures, which are well known in the art and thus will not be described further.

The processor 202 allows for receiving an indication of use of the first service by a subscriber, for example.

Upon receipt of the indication through the processor 202, the service function 24 allows for checking if the account of the subscriber comprises a sufficient number of credits for allowing the subscriber to use the first service. If the number of credits is not sufficient, the service function 24 pushes the second service to the subscriber according to the predetermined contract so as to increment the number of credits in the account. By so doing, the first service will be allowed to proceed.

If the number of credits is sufficient, the service function 24 allows the first service to proceed then.

In Figure 4, a method 300 for using a first service based on an account of a subscriber, which can be charged with a second service, is illustrated.

Method 300 starts with step 302, where the subscriber requests the use of the first service. The first service can be IM, for example.

Next, in step 304, the subscriber, through one of his/her plurality of communication devices 16, receives the second service if the number of credits is not sufficient in his/ her account. By receiving the second service, the number of credits in the account of the subscriber is increased, thus allowing the subscriber to use the first service right away or until the number of credits in the account is sufficient by keeping accepting the second service, depending on the contract predetermined between the network operator and the subscriber.

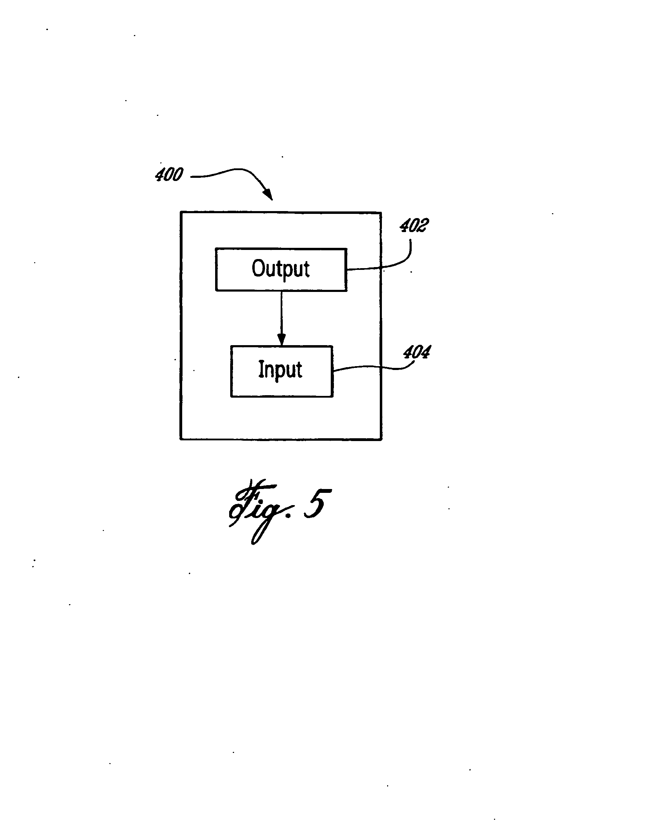

Now, turning to Figure 5, a communication device 400 for using a first service based on an account of a subscriber, the account being chargeable with a second service will be described. The communication device 400 can be one of the plurality of end-user devices 16, such as a computer or a mobile phone.

The communication device 400 comprises an output 402 and an input 404. Of course the communication node 400 also comprises a plurality of other components (not shown), such as a processor or memory, for performing its usual tasks and procedures, which are well known in the art and thus will not be described further.

The output 402 allows for requesting the use of the first service by the subscriber, for example.

And the input 404 allows for receiving the second service, in response to the request of use of the first service, if the number of credits is not sufficient in the account of the subscriber, wherein receiving the second service increases the number of credits in the account of the subscriber.

Examples of charging the account with a second service may comprise downloading a trial application, such as a social media application, that links to MySpace or Facebook with a free temporary account, signing up for a high-speed data account on the subscriber's mobile device, trying a new game, etc.

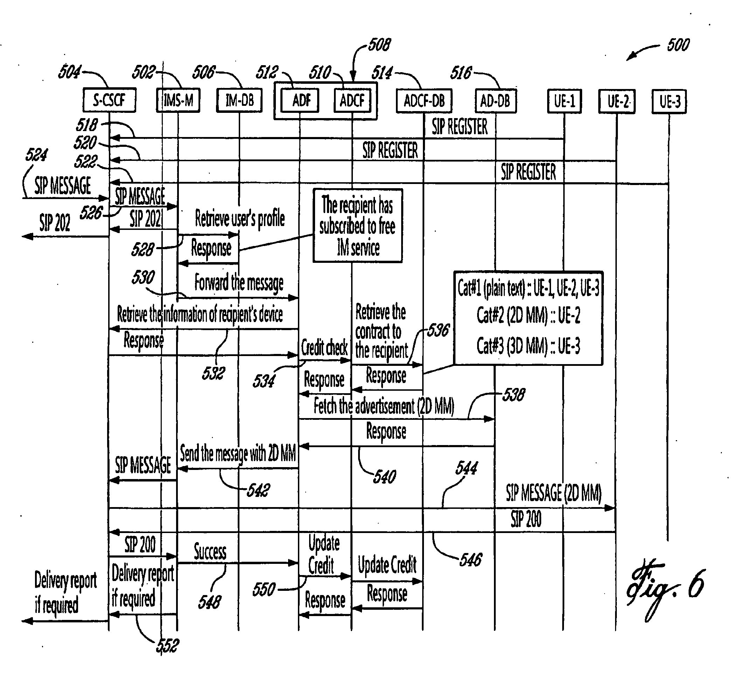

Figure 6 shows an exemplary detailed application of method 100 of Figure 2 with a traffic flow 500 in the communication network 10 of Figure 1, where the first service is using IM and the second service is using advertisements. In this particular case, the system 12 comprises an IMS-based system allowing subscribers to send each other IM.

More specifically, the IMS-based system comprises an IMS Messaging server (IMS-M) 502, for providing the IMS-based IM messaging service, for example. The IMS-M 502 is connected to a service handling server, similar to that of 14 of Figure 1. More particularly, in this case, the service handling server comprises an advertisement handling server 508. The advertisement handling server 508 includes an advertisement charging function (ADCF) 510 and an advertisement function (ADF) 512, which have some similar characteristics as the service charging function 22 and the service function 24 of Figure 1 respectively. It should be noted that the ADF 512 and the ADCF 510 can be co-located in the same node, or located in different nodes. The advertisement handling server 508 is connected to a first database, called ADCF Database (ADCF-DB) 514 which contains the profiles and contracts of the subscribers. The advertisement handling server 508 is also connected to a second database, called Advertisement Database (AD-DB) 516, which comprises the advertisement contents from which the ADF 512 can select an advertisement for transmission to the sub-scribers.

The IMS-M 502 is also connected to a Serving Call Session Control Function (S-CSCF) 504 and an Instant Messaging Database (IM-DB) 506. The S-CSCF 504 allows for processing SIP signaling packets in IMS and is believed to be well-known in the art. The IM-DB 506 contains the profiles of the users in the IMS-based system.

It is assumed that the subscriber has 3 end-user devices 16, UE-1, UE-2 and UE-3, which can be a computer, a mobile phone and the like, and which are connected to the communication network 10. The devices UE-1, UE-2 and UE-3 are registered in the IMS domain (steps 518 to 522), for example, under the same subscriber's subscription.

Also, it is assumed in this case that the subscriber is the recipient of the messages that his/her friends wish to send to him/her. Also, for example, the contract between the network operator and the recipient can stipulate that the recipient can receive free messages in exchange of accepting advertisements.

In step 524, a SIP message arrives at the S-CSCF 504. It is then forwarded to the IMS-M 502 in step 526.

In step 528, the IMS-M 502 retrieves the recipient's profile in the IM-DB 506 based on the request ID of the received SIP message, for example. The profile of the recipient shows that, in this case, the recipient has subscribed to the free IM service, for example.

Next, in step 530, the IMS-M 502 forwards the message to the advertisement handling server 508 and more specifically to the ADF 512.

The advertisement function 512 retrieves in step 532 which device of the plurality of end-devices of the subscriber (or the recipient) that has been signaled, i.e. which current device the recipient is using, e.g. UE-1, UE-2 or UE-3. If the recipient uses UE-2, then information about the UE-2 is retrieved.

Then, in step 534, the advertisement charging function 510 checks if the recipient's account has a sufficient number of credits for receiving the current SIP message. Alternatively, the ADF 510 can initiate the checking and the ADCF 512 actually checks the number of credits in the account.

In step 536, if the account of the recipient does not have a sufficient number of credits, the advertisement charging function 510 retrieves the contract information predetermined between the recipient and the network operator, from the ADCF-DB 514 for example. The retrieved contract may specify, for example, which category of advertisements (e.g. text, multimedia, 2D or 3D, etc.) to be pushed to the recipient through the advertisement function 512. In this case, for example, 2D advertisements have been specified for UE-2.

Then, in step 538, upon receipt of the category of the advertisements, the advertisement function 512 selects the corresponding advertisement content (2D in this case) from the AD-DB 516.

Next, in step 540, the advertisement function 512 adds/inserts the selected advertisement to the received SIP message and sends it to the IMS-M 502 in step 542.

In step 544, upon receipt of the message with the advertisement, the IMS-M 502 transmits the message to the recipient, more specifically to the UE-2 device.

It should be noted that the selected advertisement can be also sent to the recipient in a distinct message, either in parallel with the SIP message, before or even after the SIP message. In the case where the selected advertisement is sent to the recipient after the SIP message, it could be necessary to have a confirmation from the recipient that he/ she has viewed the advertisement, for example.

In step 546, upon receiving the message with the advertisement through the UE-2, the recipient sends a SIP 200 OK back to the S-CSCF 504, then to the IMS-M 502.

Then in step 548, the IMS-M 502 informs the advertisement function 512 about the successful delivery of the message with the selected advertisement inserted therein.

In step 550, the advertisement function 512 instructs the advertisement charging function 510 to update the number of credits in the recipient's account, which allows the recipient to send and receive instant messages.

In step 552, the IMS-M 502 can send out a delivery report if the sender ever requests it.

It should be noted that the number of credits can be increased when the ADF 512 inserts the selected advertisement in the message, i.e. before the recipient receives the message.

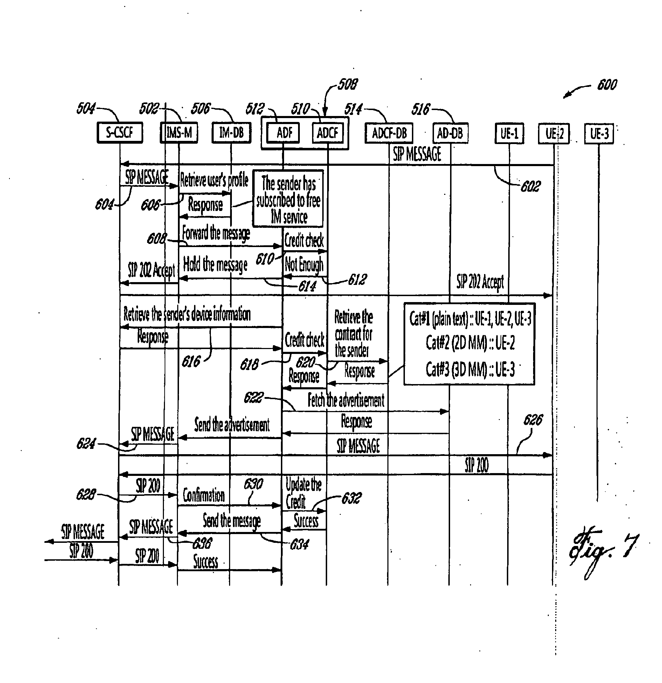

Figure 7 illustrates an exemplary detailed application of method 100 with a traffic flow 600 for sending instant messages according to a pre-determined contract between the sender and the network operator and with the account of the sender being chargeable with advertisements. The framework and assumptions for traffic flow 600 are similar to the traffic flow 500 of Figure 6. Also, the network elements in Figure 7 are similar to those in Figure 6.

The traffic flow 600 starts with step 602 where the sender sends a SIP message towards his/her friends. The message arrives at the S-CSCF 504 and is then forwarded to the IMS-M 502 in step 604 through the end-user device UE-2, for example.

In step 606, the IMS-M 502 retrieves the sender's profile from the IM-DB 506. In this case, for example, the sender's profile specifies that the sender has subscribed to the "Free IM service".

In step 608, the IMS-M 502 forwards the received message to the advertisement function 512.

In step 610, the advertisement charging function 510 checks if the sender's account has a sufficient number of credits for allowing the sender to send out his/her message. In this case, it is supposed that the sender's account does not have a sufficient number of credits (step 612).

Next, in step 614, the advertisement function 512 stores temporarily the message in a repository, for example.

In step 616, the advertisement function 512 retrieves the sender's registered device information from the S-CSCF 504, such as the UE-2, for example, if the sender uses the UE-2 to send the message.

In step 618, again the advertisement charging function 510 checks the sender's account based upon the retrieved device UE-2's information in order to be able to select the right type of advertisements to be pushed to the retrieved device, for example. Indeed, some old 2G devices only support texts and images.

In step 620, the advertisement charging function 510 retrieves the contract between the sender and the network operator.

In step 622, based upon the retrieved contract, the advertisement function 512 selects the advertisement from the AD-DB 516. The advertisement is then sent to sender via the IMS-M 502 and the S-CSCF 504, using a SIP message, in step 624.

In step 626, the sender accepts to receive and view the advertisement and sends a SIP 200 OK back to the S-CSCF 504, which forwards it to the IMS-M 502 in step 628.

In step 630, the IMS-M 502 informs the advertisement function 512 about the successful delivery of the advertisement to the sender.

In step 632, the advertisement function 512 updates the account's credit number, thus, the previously stored message can be sent out to the sender's friends, in step 634.

In step 636, the IMS-M 502 sends out a SIP message, containing the message from the sender.

In step 638, upon receipt of the message, the recipients or the sender's friends send a SIP 200 OK (success) to the advertisement function 512.

Some advantages of the embodiments of the present invention include flexibility in building the contract between the subscribers and the network operators, which allows the latter to attract more potential subscribers. Through partnering with other companies for offering different services to the subscribers, more services can be tried out by the subscribers and revenues can be increased.

Modifications and other embodiments of the disclosed invention will come to mind to one skilled in the art having the benefit of the teachings presented in the foregoing description and the associated drawings. Therefore, it is to be understood that the invention is not to be limited to the specific embodiments disclosed and that modifications and other embodiments are intended to be included within the scope of appended claims. Although specific terms may be employed herein, they are used in a generic and descriptive sense only and not for purposes of limitation.

## Claims

1. A method (100, 500, 600) for provisioning services to a subscriber having a plurality of end-user devices (16) registered under a same subscription of the subscriber in an operator's network, the method comprising:
- receiving (102) an indication of use of a first service by the subscriber; and
- upon receipt of the indication, checking (104) if an account of the subscriber comprises a sufficient number of credits for allowing the subscriber to use the first service;
- if the number of credits is not sufficient, retrieving (106) a predetermined contract (18) between the subscriber and the network operator;
- retrieving information regarding one of the plurality of end-user devices that the subscriber is using;
- pushing a second service to the end-user device that the subscriber is using, according to the predetermined contract; and
- incrementing the number of credits in the account for allowing the first service to proceed;
wherein the predetermined contract comprises a plurality of categories of service levels, each of the plurality of categories being associated with one of the plurality of end-user devices of the subscriber.

2. A method as defined in claim 1, wherein checking if the account of the subscriber comprises a sufficient number of credits further comprises allowing the first service to proceed if the number of credits in the account is sufficient.

3. A method as defined in claim 1, wherein the first service comprises sending and receiving Instant Messaging, IM.

4. A method as defined in claim 3, wherein the second service comprises receiving advertisements.

5. A method as defined in claim 4, wherein pushing the second service to the subscriber comprises receiving an IM with an advertisement inserted therein.

6. A network node (14, 200) for provisioning services to a subscriber having a plurality of end-user devices (16) registered under a same subscription of the subscriber in an operator's network, the network node comprising:
- a processor (202) configured to receive an indication of use of a first service by the subscriber; and
- a service function (24, 204) configured to check if an account of the subscriber comprises a sufficient number of credits for allowing the subscriber to use the first service;
- if the number of credits is not sufficient, the service function is configured to:
-- retrieve a predetermined contract (18) between the subscriber and the network operator,
-- retrieve information regarding one of the plurality of end-user devices that the subscriber is using,
-- push a second service to the end-user device that the subscriber is using, according to the predetermined contract, and
-- increment the number of credits in the account for allowing the first service to proceed;
wherein the predetermined contract comprises a plurality of categories of service levels, each of the plurality of categories being associated with one of the plurality of end-user devices of the subscriber.

7. A network node as defined in claim 6, wherein the service function is configured to allow the first service to proceed if the number of credits in the account is sufficient.

8. A network node as defined in claim 6, wherein the first service comprises sending and reception of Instant Messaging, IM.

9. A network node as defined in claim 8, wherein the second service comprises reception of advertisements.

10. A network node as defined in claim 9, wherein the service function is configured to push an IM with an advertisement inserted therein to the subscriber.

## Patentansprüche

1. Verfahren (100, 500, 600) zur Bereitstellung von Diensten für einen Teilnehmer mit einer Vielzahl von Endbenutzervorrichtungen (16), die unter einer gleichen Subskription des Teilnehmers in einem Betreibernetzwerk registriert sind, wobei das Verfahren umfasst:
- Empfangen (102) einer Angabe der Verwendung eines ersten Dienstes durch den Teilnehmer; und
- bei Empfang der Angabe, Prüfen (104), ob ein Account des Teilnehmers eine ausreichende Anzahl von Credits umfasst, um dem Teilnehmer zu erlauben, den ersten Dienst zu verwenden;
- falls die Anzahl von Credits unzureichend ist, Holen (106) eines vorbestimmten Vertrags (118) zwischen dem Teilnehmer und dem Netzwerkbetreiber;
Holen von Informationen hinsichtlich der Vielzahl von Endbenutzervorrichtungen, die der Teilnehmer verwendet;
Pushen eines zweiten Dienstes zu dem Endbenutzergerät, das der Teilnehmer verwendet, gemäß dem vorbestimmten Vertrag; und
Inkrementieren der Anzahl von Credits in dem Account, um dem ersten Dienst zu ermöglichen, fortzufahren;
wobei der vorbestimmte Vertrag eine Vielzahl an Kategorien von Dienstleveln umfasst, wobei jede der Vielzahl von Kategorien mit einem der Vielzahl von Endbenutzergeräten des Teilnehmers assoziiert ist.

2. Verfahren gemäß Anspruch 1, wobei das Prüfen, ob der Account des Teilnehmers eine ausreichende Anzahl von Credits umfasst, weiterhin ein Zulassen des Fortfahrens des ersten Dienstes umfasst, falls die Anzahl von Credits in dem Account ausreichend ist.

3. Verfahren gemäß Anspruch 1, wobei der erste Dienst das Senden und Empfangen von Instant Messaging, IM, umfasst.

4. Verfahren gemäß Anspruch 3, wobei der zweite Dienst das Empfangen von Werbung umfasst.

5. Verfahren gemäß Anspruch 4, wobei das Pushen des zweiten Dienstes zu dem Teilnehmer ein Empfangen einer IM mit darin eingefügter Werbung umfasst.

6. Netzwerkknoten (14, 200) zur Bereitstellung von Diensten für einen Teilnehmer mit einer Vielzahl von Endbenutzergeräten (16), die unter einer gleichen Subskription des Teilnehmers in einem Betreibernetzwerk registriert sind, wobei der Netzwerkknoten umfasst:
- einen Prozessor (202), der konfiguriert ist, um eine Angabe der Verwendung eines ersten Dienstes durch den Teilnehmer zu empfangen; und
- eine Dienstfunktion (24, 204), die konfiguriert ist zu prüfen, ob ein Account des Teilnehmers eine ausreichende Anzahl von Credits umfasst, um dem Teilnehmer zu erlauben, den ersten Dienst zu verwenden;
- wobei, falls die Anzahl von Credits unzureichend ist, die Dienstfunktion konfiguriert ist, um:
einen vorbestimmten Vertrag (18) zwischen dem Teilnehmer und dem Netzwerkbetreiber zu holen;
Informationen hinsichtlich der Vielzahl von Endbenutzergeräten zu holen, die der Teilnehmer verwendet;
einen zweiten Dienst zu dem Endbenutzergerät zu pushen, das der Teilnehmer verwendet, gemäß dem vorbestimmten Vertrag, und
die Anzahl von Credits in dem Account zu inkrementieren, um dem Dienst ein Fortfahren zu erlauben;
wobei der vorbestimmte Vertrag eine Vielzahl von Kategorien an Dienstleveln umfasst, wobei jede der Vielzahl von Kategorien mit einem der Vielzahl von Endbenutzergeräten des Teilnehmers assoziiert ist.

7. Netzwerkknoten gemäß Anspruch 6, wobei die Dienstfunktion konfiguriert ist, um dem ersten Dienst ein Fortfahren zu erlauben, falls die Anzahl von Credits in dem Account ausreichend ist.

8. Netzwerkknoten gemäß Anspruch 6, wobei der erste Dienst das Senden und Empfangen von Instant Messaging, IM, umfasst.

9. Netzwerkknoten gemäß Anspruch 8, wobei der zweite Dienst den Empfang von Werbung umfasst.

10. Netzwerkknoten gemäß Anspruch 9, wobei die Dienstfunktion konfiguriert ist, um eine IM mit darin eingefügter Werbung zu dem Teilnehmer zu pushen.

## Revendications

1. Procédé (100,500,600) de provisionnement de services à un abonné ayant une pluralité de dispositifs d'utilisateur (16) enregistrés sous un même abonnement de l'abonné dans un réseau d'un opérateur de réseau, le procédé comprenant de :
- recevoir (102) une indication d'utilisation d'un premier service par l'abonné ; et
- à la réception de l'indication, vérifier (104) si un compte de l'abonné comprend un nombre suffisant de crédits pourpermettre à l'abonné d'utiliser le premier service,
- si le nombre de crédits n'est pas suffisant, extraire (106) un contrat prédéterminé (18) entre l'abonné et l'opérateur de réseau;
- extraire une information concernant un de la pluralité de dispositifs d'utilisateur que l'abonné est en train d'utiliser ;
- pousser un second service vers le dispositif d'utilisateur que l'abonné est en train d'utiliser, selon le contrat prédéterminé ; et
- incrémenter le nombre de crédits dans le compte pour permettre au premier service de continuer ;
dans lequel le contrat prédéterminé comprend une pluralité de catégories de niveaux de service, chacune de la pluralité de catégories étant associée à un de la pluralité de dispositifs d'utilisateur de l'abonné.

2. Procédé selon la revendication 1, dans lequel la vérification que le compte de l'abonné comprend un nombre suffisant de crédits comprend en outre de permettre au premier service de continuer si le nombre de crédits dans le compte est suffisant.

3. Procédé selon la revendication 1, dans lequel le premier service comprend d'envoyer et de recevoir une messagerie instantanée, IM.

4. Procédé selon la revendication 3, dans lequel le second service comprend de recevoir des annonces.

5. Procédé selon la revendication 4, dans lequel pousser le second service vers l'abonné comprend de recevoir un IM avec une annonce insérée dans celui-ci.

6. Noeud de réseau (14,200) pour le provisionnement de services à un abonné ayant une pluralité de dispositifs d'utilisateur (16) enregistrés sous un même abonnement de l'abonné dans un réseau d'un opérateur de réseau, le noeud de réseau comprenant :
- un processeur (202) configuré pour recevoir une indication d'utilisation d'un premier service par l'abonné ; et
- une fonction de service (24,204) configurée pour vérifier si un compte de l'abonné comprend un nombre suffisant de crédits pour permettre à l'abonné d'utiliser le premierservice ;
- si le nombre de crédits n'est pas suffisant, la fonction de service est configurée pour :
- extraire un contrat prédéterminé (18) entre l'abonné et l'opérateur de réseau,
- extraire une information concernant un de la pluralité de dispositifs d'utilisateur que l'abonné est en train d'utiliser,
- pousser un second service vers le dispositif d'utilisateur que l'abonné est en train d'utiliser, selon le contrat prédéterminé, et
- incrémenter le nombre de crédits dans le compte pour permettre au premier service de continuer ;
dans lequel le contrat prédéterminé comprend une pluralité de catégories de niveaux de service, chacune de la pluralité de catégories étant associée à un de la pluralité de dispositifs d'utilisateur de l'abonné.

7. Noeud de réseau selon la revendication 6, dans lequel la fonction de service est configurée afin de permettre au premier service de continuer si le nombre de crédits dans le compte est suffisant.

8. Noeud de réseau selon la revendication 6, dans lequel le premier service comprend l'envoi et la réception de messagerie instantanée, IM.

9. Noeud de réseau selon la revendication 8, dans lequel le second service comprend la réception d'annonces.

10. Noeud de réseau selon la revendication 9, dans lequel la fonction de service est configurée pour pousser un IM avec une annonce insérée dans celui-ci vers l'abonné.
